(19) Europäisches Patentamt
European Patent Office
Office européen des brevets

(11) **EP 4 586 158 A1**

(12) **EUROPÄISCHE PATENTANMELDUNG**

(43) Veröffentlichungstag:
**16.07.2025 Patentblatt 2025/29**

(21) Anmeldenummer: **24151467.8**

(22) Anmeldetag: **11.01.2024**

(51) Internationale Patentklassifikation (IPC):
*G06Q 10/04* (2023.01)   *G06Q 10/087* (2023.01)
*G06Q 10/30* (2023.01)   *G06Q 50/04* (2012.01)

(52) Gemeinsame Patentklassifikation (CPC):
**G06Q 10/04; G06Q 10/043; G06Q 10/087;
G06Q 10/30; G06Q 50/04**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Hasiri Holding AG
8450 Andelfingen (CH)**

(72) Erfinder: **RIEDO, Lukas
8462 Rheinau (CH)**

(74) Vertreter: **Keller Schneider
Patent- und Markenanwälte AG
Eigerstrasse 2
Postfach
3000 Bern 14 (CH)**

(54) **SCHNEIDANLAGE MIT VERBESSERTER AUSNUTUTZUNG DER RESTTEILE**

(57)      Die Anlage ist dazu bestimmt, eine Vielzahl von unterschiedlichen Schneidaufträgen zu unregelmässigen Zeitpunkten im Wesentlichen sequentiell abzuarbeiten. Es wird zuerst ein Bearbeitungsteil aus der Materiallagerdatenbank ausgewählt. Danach werden die zu produzierenden Nutzteile des aktuellen Schneidauftrags auf dem Bearbeitungsteil optimiert angeordnet, so dass der Bearbeitungsteil zweigeteilt ist in einen zusammenhängenden Bereich mit Nutzteilen und einen zusammenhängenden Restteil ohne Nutzteile. Als nächstes wird ein Materialfluss-Steuerbefehl für den Restteil erzeugt, wobei der Materialfluss-Steuerbefehl mindestens einen ersten Zustand einnehmen kann, der ein einlagern signalisiert und einen zweiten Zustand, der ein rezyklieren signalisiert. Der Materialfluss-Steuerbefehl basiert auf einer Wiederverwendungsprognose des Restteils für einen definierten Zul<unftszeitraum ab Zeitpunkt des aktuellen Schneidauftrags. Dabei werden die ausgeführten Schneidaufträge berücksichtigt. Liegt die Wiederverwendungs-Prognose über einem Schwellwert, wird der Restteil in das Materiallager gebracht.

Fig. 1

EP 4 586 158 A1

## Beschreibung

### Technisches Gebiet

Die Erfindung betrifft eine Anlage, die eine Schneidmaschine und ein Materiallager aufweist und die geeignet ist, eine Vielzahl von unterschiedlichen und zu unregelmässigen Zeitpunkten auftretenden Schneidaufträgen im Wesentlichen sequentiell abzuarbeiten.

### Stand der Technik

Der möglichst sparsame Umgang mit Rohmaterialien in Produktionsprozessen ist zunehmend wichtig. So werden Reste von Rohmaterialien, die in der Produktion anfallen, rezykliert. Beispielsweise, werden Metallteile wieder eingeschmolzen und zu neuen Rohmaterialteilen geformt. Besser ist es, wenn die Reste im Produktionsbetrieb selbst für die Herstellung anderer Nutzteile wiederverwendet werden.

Aus der US 4 534 002 (Ltv Steel) ist ein Verfahren zum Herstellen von Rohren bekannt. Die Reste werden dadurch minimiert, dass die Rohrlängen innerhalb der vom I<äufer zugelassenen Längenabweichungen so variiert werden, dass möglichst keine oder zumindest möglichst kurze Restteile anfallen.

Aus der BE 1 027 915 A1 (Lucl<x) ist ein Verfahren zum Herstellen von Fensterrahmen aus Profilen bekannt, bei dem alle Restteile eingelagert werden, die eine Mindestlänge von z.B. 50 cm haben. I<ürzere Profilreste werden rezykliert bzw. entsorgt.

Es besteht ein Bedarf, dass auch beim Schneiden von Nutzteilen aus plattenförmigem Material die Ausnutzung des Materials verbessert wird. Gegenwärtig basiert der Entscheid, ob ein Restteil aufbewahrt wird oder nicht, primär auf der individuellen Erfahrung der für den Betrieb der Schneidmaschine zuständigen technischen Fachperson. Dies führt erfahrungsgemäss dazu, dass sich das Materiallager zunehmend mit Restteilen füllt und dass es von Zeit zu Zeit wieder geräumt werden muss. Das heisst, beim Räumen werden die Restteile alle entsorgt bzw. rezykliert. Damit werden sie im Endeffekt - entgegen der Absicht zum Zeitpunkt des Einlagerns- nicht wiederverwertet in der Anlage.

Die vorgenannten Verfahren wenden zwar eine computergestützte technische Methode an, um systematisch und automatisch die Materialausnutzung zu erhöhen. Sie lassen sich aber nicht oder zumindest nicht zufriedenstellend auf die Verarbeitung von Plattenmaterial anwenden.

### Darstellung der Erfindung

### Aufgabe

Aufgabe der Erfindung ist es, eine dem eingangs genannten technischen Gebiet zugehörende Anlage zu schaffen, welche auch mit Rechnern einer kleinen Rechnerleistung eine verbesserte Nutzung des Rohmaterials erreicht.

### Lösung

Die Lösung der Aufgabe ist durch die Merkmale des Anspruchs 1 definiert. Gemäss der Erfindung hat die Anlage zumindest folgende Komponenten:

a) Eine Schneidmaschine zum Schneiden von Nutzteilen aus einem Standardmaterialteil oder einem wiederverwendbaren Restteil;

b) ein Materiallager mit Standardmaterialteilen und wiederverwendbaren Restteilen;

c) einen Rechner;

d) Datenbanken, nämlich

    i. eine Auftragsdatenbanl< mit Daten von in der Vergangenheit ausgeführten Schneidaufträgen,

    ii. eine Materiallagerdatenbanl< mit Daten von Standardteilen und Restteilen,

    iii. eine Auftragsklassendatenbank mit Daten zu Klassen von Schneidaufträgen,

    iv. eine Restteilklassendatenbank mit Daten zu Klassen von Restteilen;

Die Anlage ist geeignet, um eine Vielzahl von unterschiedlichen Schneidaufträgen, die zu unregelmässigen Zeitpunkten anfallen, im Wesentlichen sequentiell abzuarbeiten. Es ist nämlich in der Praxis eine Vorgabe bei solchen Anlagen, dass die I<undenaufträge alle möglichst zeitnah ab Auftragseingang abgearbeitet werden.

Ein aktueller Schneidauftrag enthält zumindest ein zu produzierendes Nutzteil mit geometrischer Form, Materialeigenschaften und Anzahl Nutzteile als technische Nutzteildaten.

Gemäss der Erfindung ist der Rechner so eingerichtet, dass er im Betrieb für einen aktuellen Schneidauftrag zumindest folgende Schritte durchführt:

e) Auswählen eines Bearbeitungsteils aus der Materiallagerdatenbanl<, indem

i. entweder ein wiederverwendbarer Restteil als Bearbeitungsteil ausgewählt wird, so dass aus dem Restteil zumindest ein Nutzteil des aktuellen Schneidauftrags produziert werden kann,

ii. oder ein Standardteil als Bearbeitungsteil ausgewählt wird, sofern kein wiederverwendbarer Restteil für den aktuellen Schneidauftrag vorhanden ist;

f) Optimiertes Anordnen zumindest eines Teils der zu produzierenden Nutzteile des aktuellen Schneidauftrags auf dem Bearbeitungsteil, so dass der Bearbeitungsteil zweigeteilt ist in einen zusammenhängenden Bereich mit Nutzteilen und einen zusammenhängenden Restteil ohne Nutzteile;

g) Erzeugen eines Materialfluss-Steuerbefehls für den Restteil, wobei der Materialfluss-Steuerbefehl mindestens zwei Zustände zum Steuern eines Materialflusses einnehmen kann, nämlich einen Zustand, der ein einlagern signalisiert und einen Zustand der ein rezyklieren signalisiert;

h) wobei für einen definierten Zul<unftszeitraum ab Zeitpunkt des aktuellen Schneidauftrags folgende Schritte durchgeführt werden:

i. Einordnen der in der Vergangenheit ausgeführten Schneidaufträge in vorgegebene Auftragsklassen der Auftragsklassen-Datenbank;

ii. Einordnen der Restteile der Materiallagerdatenbank in vorgegebene Restteilklassen der Restteilklassen-Datenbank;

iii. Berechnen einer Wiederverwendungs-Prognose per Ende des Zul<unftszeitraums für den Restteil unter Verwendung der Daten aus der Auftragsdatenbanl< und der Auftragsklassen-Datenbank sowie der Daten aus der Materiallager-Datenbank und der Restklassen-Datenbank;

iv. Vergleichen der Wiederverwendungs-Prognose mit einer Untergrenze;

v. Erzeugen des Zustands einlagern, wenn die Wiederverwendungs-Prognose mindestens so gross wie die Untergrenze ist oder Erzeugen des Zustands rezyklieren, wenn die Wiederverwendungs-Prognose unter der Untergrenze ist;

vi. Aktualisieren der Materiallagerdatenbank, sofern für den Restteil der Materialfluss-Steuerbefehl den Zustand einlagern hat;

vii. Einfügen des aktuellen Schneidauftrags in die Auftragsdatenbanl<.

Danach wird in der Anlage der gemäss Schritt e) «Auswählen eines Bearbeitungsteils» vom Rechner ausgewählte Bearbeitungsteil aus dem Materiallager zur Schneidmaschine gebracht. Die Schneidmaschine schneidet die Nutzteile aus dem Bearbeitungsteil. Der Restteil wird gemäss dem Materialfluss-Steuerbefehl entweder in das Materiallager eingelagert (für eine spätere Wiederverwendung) oder recycliert (und damit aus der Anlage entfernt).

**Vorteile**

Weil die ausgeführten Schneidaufträge in Klassen eingeteilt werden, kann der Rechenaufwand um Skalen reduziert werden. Wenn z.B. 100'000 Schneidaufträge auf 500 Auftragsklassen verteilt werden, ergibt sich eine entsprechende Reduktion der Rechenleistung beim Vergleichen der errechneten Restteile mit den ausgeführten Schneidaufträgen. Es muss nur auf 1<lassenebene verglichen werden.

Das Einordnen der in der Vergangenheit ausgeführten Schneidaufträge in vorgegebene Auftragsklassen kann zu Zeiten erfolgen, in denen der Rechner wenig ausgelastet ist. Das laufende Aufdatieren der Datenbanken mit einem neu ausgeführten Schneidauftrag erfordert keinen grossen Rechenaufwand.

Indem die Anlage mit einer automatisierten Entscheidung arbeitet, ergibt sich eine Systematik, wie sie mit einer Einzelentscheidung einer Fachperson nicht erreicht werden kann.

Weil die Anlage bei der Materialfluss-Steuerung die in der Vergangenheit ausgeführten Schneidaufträge berücksichtig, wird der Materialfluss der Restteile dynamisch gesteuert. Dies steht im Gegensatz zu der Anlage gemäss BE 1 027 915 A1 (Lucl<x), die ein starres geometrisches I<riterium (z.B. Mindestlänge des Restteils) verwendet, um die Materialausnutzung zu optimieren. Die von der Erfindung angestrebte Verbesserung der Materialausnutzung passt sich somit dem tatsächlichen Materialbedarf an. Es hat sich gezeigt, dass der Anteil an rezykliertem Material sich deutlich senken lässt mit der Erfindung.

Indem ein Zul<unftszeitraum definiert wird (der ein Zeitfenster ab dem aktuellen Zeitpunkt definiert) und indem die Wiederverwendungs-Prognose auf diesen Zul<unftszeitraum bezogen wird, kann erreicht werden, dass der Materialfluss der Restteile durch das Materiallager grösser wird. Es werden primär Restteile eingelagert, die innerhalb des Zul<unftszeitraums wiederverwendet und somit aus dem Materiallager entnommen werden.

In der erfindungsgemässen Anlage wird das Materiallager nicht mit Restteilen gefüllt, die dann doch nicht benutzt werden. Aus wirtschaftlicher Sicht ergibt das den Vorteil, dass die Lagerkosten vergleichsweise reduziert werden.

Die erfindungsgemässe Anlage eignet sich vor allem zum Verarbeiten von Plattenmaterial und Plattenteilen. Es ist aber auch möglich, die Anlage für andere Arten von Teilen zu verwenden, z.B. für das Zuschneiden von Stangenmaterial oder Rohrmaterial. Denkbar ist auch die Verarbeitung von Volumenmaterial wie z.B. I<unststoffblöcl<e, Holzblöcke oder ähnliches.

Im Folgenden werden besondere Ausführungsarten der Erfindung dargestellt

### Ausführungsart 1: Weniger Restteilklassen als Auftragsklassen

Gemäss einer besonderen Ausführungsart der Erfindung ist die Zahl der Restteilklassen kleiner, insbesondere mindestens zehnmal kleiner als die Zahl der Auftragsklassen. Dies hat den Vorteil, dass eine relativ feine Aufteilung der ausgeführten Schneidaufträge möglich ist, und dass der Rechenaufwand für das Ermitteln des Materialfluss-Steuerbefehls trotzdem relativ klein bleibt.

### Ausführungsart 2: optisches Erfassungsgerät

Gemäss einer besonderen Ausführungsart der Erfindung weist die Anlage ein optisches Erfassungsgerät auf, das datentechnisch mit dem Computer verbunden ist. Es erfasst nach dem Schneiden der Nutzteile aus dem Bearbeitungsteil ein Bild vom geschnittenen Bearbeitungsteil und übermittelt dieses an den Rechner. Der Rechner verifiziert den berechneten Restteil anhand des Bildes und korrigiert falls nötig die Form des berechneten Restteils in der Materiallager-Datenbank.

Dies hat den Vorteil, dass die Schnitte auf der Schneidmaschine bei Bedarf angepasst werden können und dass die in der Materiallager-Datenbank gespeicherten Daten zum Restteil entsprechend dem real vorliegenden Restteil berichtigt werden können. Dies ist für teilautomatisierte Anlagen von Bedeutung, wo der Operateur der Schneidmaschine gewisse Schritte manuell steuert.

Abweichend zur obigen Ausführungsart kann auf ein optisches Erfassungsgerät verzichtet werden. Beispielsweise wenn im normalen Produktionsprozess keine manuellen Eingriffe nötig oder möglich sind.

### Ausführungsart 3: vorgegebener Vergangenheitszeitraum

Gemäss einer besonderen Ausführungsart der Erfindung ist der Rechner dafür eingerichtet, dass beim Berechnen einer Wiederverwendungs-Prognose per Ende des Zul<unftszeitraums für den Restteil nur Daten aus der Auftragsdatenbanl< berücksichtigt werden, die innerhalb eines vorgegebenen Vergangenheitszeitraums liegen.

Bei gewissen Ausführungsformen wird der Vergangenheitszeitraum ungefähr gleich gross gewählt wie der Zul<unftszeitraum. Er kann auch doppelt so gross wie der Zul<unftszeitraum sein. In beiden Fällen ist der Vergangenheitszeitraum in der gleichen Grössenordnung wie der Zul<unftszeitraum.

Bei weiteren Ausführungsformen wird der Vergangenheitszeitraum so gewählt, dass er eine Grössenordnung grösser ist als der Zul<unftszeitraum. In diesem Sinn kann der Vergangenheitszeitraum beispielsweise zehnmal oder zwanzigmal so gross sein wie der Zul<unftszeitraum.

Abweichend von der obigen Ausführungsart ist der Vergangenheitszeitraum nicht festgelegt. Dies ist z.B. dann der Fall, wenn der Vergangenheitszeitpunl<t ein fixes Datum ist und wenn somit alle ausgeführten Schneidaufträge berücksichtigt werden, die seit dem fixen Datum bis zum aktuellen Zeitpunkt angefallen sind. Mit fortschreitender Lebensdauer der Anlage wird der Vergangenheitszeitraum somit länger und länger.

## Ausführungsart 4: Materiallager voll

Gemäss einer besonderen Ausführungsart der Erfindung wird der Materialfluss-Steuerbefehl auf rezyklieren gesetzt, falls das Materiallager für die Restteile voll ist. Auf diese Weise wird automatisch sichergestellt, dass kein Restteil in das Materiallager transportiert wird, der dort nicht eingelagert werden kann.

Abweichend von der obigen Ausführungsart kann auch mit einem separaten System dafür gesorgt werden, dass das Materiallager nicht überfüllt wird.

## Ausführungsart 5: Untergrenzen unterschiedlich

Gemäss einer besonderen Ausführungsart der Erfindung sind nicht alle Untergrenzen gleich gross: für Restteile bzw. Restteilklassen mit z.B: unterschiedlicher Materialeigenschaften (Edelstahl vs. Messing, matte vs. Glänzende Oberfläche etc.) sind also unterschiedliche Untergrenzen zum Ermitteln des Materialfluss-Steuerbefehls vorhanden. Es können auch unterschiedliche Untergrenzen für unterschiedliche Restteil-Grössen angesetzt werden. Auf diese Weise ist es möglich, den Materialfluss z.B. manuell zu beeinflussen. Wird eine Untergrenze im Rechner bewusst angehoben, werden tendenziell weniger Restteile der entsprechenden Restteilklasse in das Materiallager zurückgeführt.

Abweichend zur obigen Ausführungsart kann für alle Restteilklassen dieselbe Untergrenze angesetzt werden.

Die Untergrenze soll so angesetzt sein, dass die Wahrscheinlichkeit hoch ist, z.B. 80% ist, dass der Restteil innerhalb des Zul<unftszeitraums wiederverwendet wird. Es ist dann sehr wahrscheinlich, dass der Restteil nach Ablauf des dreifachen des Zul<unftszeitraums wieder aus dem Lager entnommen worden ist.

## Ausführungsart 6: Bearbeitungsteil zweiteilen

Gemäss einer besonderen Ausführungsart der Erfindung wird der Bearbeitungsteil in der Schneidmaschine zweigeteilt und zwar in einen zusammenhängenden Bereich mit Nutzteilen und einen zusammenhängenden Restteil ohne Nutzteile. Wenn die Nutzteile aus dem Bereich mit den Nutzteilen entfernt sind, resultiert ein sogenanntes Restgitter. Wenn das Restgitter gleich beim Schneiden der Nutzteile mit einem Schnitt von der nichtbenutzten Fläche des Bearbeitungsteils getrennt wird, vereinfacht das die Einordnung des getrimmten Restteils im Materiallager.

Abweichend zur obigen Ausführungsart, wird der Restteil nach dem Heraustrennen der Nutzteile so belassen, wie er ist.

## Erfindungsgemässes Verfahren

Die Erfindung löst auch die Aufgabe, ein Verfahren zum Betrieb einer Anlage mit einer Schneidmaschine anzugeben, welches auch mit Rechnern einer kleinen Rechnerleistung eine verbesserte Nutzung des Rohmaterials möglich macht.

Dabei soll das Verfahren geeignet sein, um eine Vielzahl von unterschiedlichen und zu unregelmässigen Zeitpunkten auftretenden Schneidaufträgen im Wesentlichen sequentiell abzuarbeiten,

Die Lösung der Aufgabe ist durch ein Verfahren mit folgenden Merkmalen definiert. Dabei ist das Verfahren zum Betreiben einer Anlage mit folgenden I<omponenten ausgerichtet:

a) eine Schneidmaschine zum Schneiden von Nutzteilen aus einem Standardmaterialteil oder einem wiederverwendbaren Restteil;

b) ein Materiallager mit Standardmaterialteilen und wiederverwendbaren Restteilen;

c) einen Rechner;

d) Datenbanken, nämlich

i. eine Auftragsdatenbanl< mit Daten von in der Vergangenheit ausgeführten Schneidaufträgen,

ii. eine Materiallagerdatenbanl< mit Daten von Standardteilen und Restteilen,

iii. eine Auftragsklassendatenbank mit Daten zu Klassen von Schneidaufträgen,

iv. eine Restteilklassendatenbank mit Daten zu Klassen von Restteilen,

wobei durch einen Rechner, insbesondere zum Verbessern der Materialausnutzung, für einen aktuellen Schneidauftrag,

der zumindest ein zu produzierendes Nutzteil mit geometrischer Form, Materialeigenschaften und Anzahl Nutzteile als technische Nutzteildaten beinhaltet,

zumindest folgende Schritte durchgeführt werden:

e) Auswählen eines Bearbeitungsteils aus der Materiallagerdatenbanl<, indem

i. entweder ein wiederverwendbarer Restteil als Bearbeitungsteil ausgewählt wird, so dass aus dem Restteil zumindest ein Nutzteil des aktuellen Schneidauftrags produziert werden kann;

ii. oder ein Standardteil als Bearbeitungsteil ausgewählt wird, sofern kein wiederverwendbarer Restteil für den aktuellen Schneidauftrag vorhanden ist;

f) Optimiertes Anordnen zumindest eines Teils der zu produzierenden Nutzteile des aktuellen Schneidauftrags auf dem Bearbeitungsteil, so dass der Bearbeitungsteil geometrisch zweigeteilt ist in einen zusammenhängenden Bereich mit Nutzteilen und einen zusammenhängenden Restteil ohne Nutzteile;

g) Erzeugen eines Materialfluss-Steuerbefehls für den Restteil, wobei der Materialfluss-Steuerbefehl mindestens zwei Zustände zum Steuern eines Materialflusses hat, nämlich einlagern und rezyklieren, wobei für einen definierten Zul<unftszeitraum ab Zeitpunkt des aktuellen Schneidauftrags folgende Schritte durchgeführt werden:

i. Einordnen der in der Vergangenheit ausgeführten Schneidaufträge in vorgegebene Auftragsklassen der Auftragsklassen-Datenbank;

ii. Einordnen der in der Restteile der Materiallagerdatenbanl< in vorgegebene Restteilklassen der Restteilklassen-Datenbank;

iii. Berechnen einer Wiederverwendungs-Prognose per Ende des Zul<unftszeitraums für den Restteil unter Verwendung der Daten aus der Auftragsdatenbanl< und der Auftragsklassen-Datenbank sowie der Daten aus der Materiallager-Datenbank und der Restklassen-Datenbank;

iv. Vergleichen der Wiederverwendungs-Prognose mit einer Untergrenze;

v. Erzeugen des Zustands einlagern, wenn die Wiederverwendungs-Prognose mindestens so gross wie die Untergrenze ist oder Erzeugen des Zustands rezyklieren, wenn die Wiederverwendungs-Prognose unter der Untergrenze ist;

vi. Aktualisieren der Materiallagerdatenbanl<, sofern für den Restteil der Materialfluss-Steuerbefehl den Zustand einlagern hat;

vii. Einfügen des aktuellen Schneidauftrags in die Auftragsdatenbanl<;

Ein Computerprogrammprodukt gemäss der Erfindung umfasst Befehle, die bei der Ausführung des Programms durch einen Computer diesen veranlassen, die Schritte e) bis g) gemäss dem oben genannten Verfahren auszuführen.

Bei einer besonderen Ausführungsart wird in der Anlage der vom Rechner ausgewählte Bearbeitungsteil aus dem Materiallager zur Schneidmaschine gebracht. Die Schneidmaschine schneidet die Nutzteile aus dem Bearbeitungsteil und der Restteil wird gemäss dem Materialfluss-Steuerbefehl entweder in das Materiallager eingelagert oder recycliert.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung der Ausführungsbeispiele verwendeten Zeichnungen zeigen:

Fig. 1    Eine schematische Darstellung einer Anlage;
Fig. 2    Eine schematische Darstellung der Materialflusssteuerung;
Fig. 3    Ein Beispiel für eine optimierte Anordnung der Nutzteile auf einem Bearbeitungsteil;
Fig. 4    Eine schematische Darstellung der zeitlichen Verteilung von ausgeführten Schneidaufträgen;
Fig. 5    Eine schematische Darstellung unterschiedlicher Auftragsklassen;
Fig. 6    Eine schematische Darstellung einer Befüllung der Auftragsklassen;
Fig. 7    Eine schematische Darstellung unterschiedlicher Restteilklassen;
Fig. 8    Eine schematische Darstellung einer zeitlichen Veränderung einer Befüllung der Restteilklassen;
Fig. 9    Ein Beispiel für ein Verfahren zum Ermitteln des Materialfluss-Steuerbefehls;
Fig. 10   Ein Beispiel für ein Verfahren zum Ermitteln des Materialfluss-Steuerbefehls auf Basis eines Trendprognose-Modells.

Grundsätzlich sind in den Figuren gleiche Teile mit gleichen Bezugszeichen versehen.

## Wege zur Ausführung der Erfindung

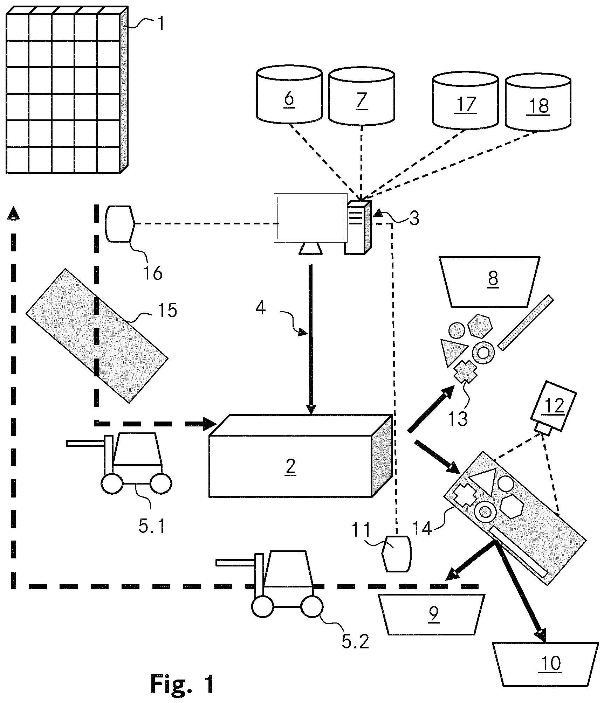

**Fig. 1** zeigt eine schematische Darstellung einer Anlage, die zur Durchführung der erfindungsgemässen Verfahren geeignet ist. Anlagen dieser Art werden von Unternehmen genutzt, die im Auftrag Teile schneiden (sogenannte «Job-Shops»).

Die hier gezeigte Anlage hat im Sinn einer besonderen Ausführungsform folgende I<omponenten:

- Ein Materiallager 1, das z.B. Gestelle zum Lagern von verschieden grossen und verschieden dicken Standardplatten (als Standardteile) und Restplatten (als Restteile) hat. Das Materiallager 1 ist bei laufendem Betrieb normalerweise teilweise gefüllt.

- Eine Schneidmaschine 2, die die Nutzteile in gewünschter Zahl und Form aus einer Bearbeitungsplatte 15 schneidet.

- Einen Rechner 3, der über eine Datenverbindung 4 (z.B. ein WLAN) mit der Schneidmaschine 2 verbunden ist, um die Schnittdaten zum Schneiden der Nutzteile aus der Bearbeitungsplatte zu übertragen.

- Ein oder mehrere Transporter 5.1, 5.2. Hier sind schematisch zwei Transporter in Form von Gabelstaplern gezeigt. Ihre Anzahl richtet sich nach der Grösse und dem Bedarf der Anlage. Die Transporter 5.1, 5.2 können für die manuelle Bedienung ausgerüstet sein. Es ist aber auch möglich, dass es sich um autonom fahrende Transporter handelt, die von einer mit dem Rechner 3 verbundenen Transportsystemsteuerung gesteuert werden.

- zwei Datenbanken, nämlich eine Auftragsdatenbanl< 6 und eine Materiallagerdatenbank 7. In der Auftragsdatenbanl< 6 sind die in der Vergangenheit ausgeführten Schneidaufträge gespeichert. Es können auch aktuell vorliegende, aber noch nicht bearbeitete Schneidaufträge gespeichert sein, die nach ihrer Ausführung dem Datenbereich der in der Vergangenheit ausgeführten Schneidaufträge zugeordnet werden. In der Materiallagerdatenbanl< 7 sind die Daten der im Materiallager 1 vorhandenen Standardplatten und Restplatten gespeichert. Der Rechner 3 ist mit den beiden Datenbanken 6, 7 datentechnisch verbunden.

- Zwei weitere Datenbanken, nämlich eine Auftragsklassen-Datenbank 17 und eine Restteilklassen-Datenbank 18. In der Auftragsklassen-Datenbank 17 sind die in einem definierten Vergangenheitszeitraum (gerechnet ab dem aktuellen Zeitpunkt) verarbeiteten Schneidaufträge in vordefinierte Auftragsklassen eingeordnet. Die Aufträge in der Auftragsklasse sind zumindest auch mit ihrem Verarbeitungsdatum und der Anzahl Nutzteile charakterisiert. Eine Auftragsklasse enthält somit eine Reihe von Zeitpunkten mit zugeordneten geometrischen Nutzteilformen und Materialeigenschaften. In der Restteil-Datenbank 18 sind die in einem definierten Vergangenheitszeitraum (gerechnet ab dem aktuellen Zeitpunkt) im Materiallager 1 eingelagerten Restteile in vordefinierte Auftragsklassen eingeordnet. Die Restteile in den Restteilklassen sind zumindest jeweils mit ihrem Einlagerungszeitpunl<t, ihrer effektiven geometrischen Form und ihren Materialeigenschaften charakterisiert. Eine Restteilklasse enthält somit eine Reihe von Zeitpunkten und zugehörigen Restteilen. Auch die Anzahl der Restteile in einer Restteilklasse ist erfasst.

- Ein Ausgabegerät 11 für den Materialfluss Steuerbefehl. Das Ausgabegerät 11 kann z.B. ein Bildschirm für den technischen Operateur der Schneidmaschine 2 sein. Der Rechner 3, der den Materialfluss-Steuerbefehl erzeugt, ist mit dem Ausgabegerät 11 verbunden. Anstelle eines Ausgabegeräts kann aber auch eine Schnittstelle zu der Schneidmaschine oder zu einer Transportsystemsteuerung vorhanden sein.

- Einen Nutzteilbehälter 8: Im vorliegenden Beispiel hat die Anlage einen oder mehrere Nutzteilbehälter 8, in die die Nutzteile 13, die aus der Schneidmaschine 2 kommen, abgelegt werden für eine nachfolgende Auslieferungsbearbeitung.

- Einen Restteilbehälter 9: In diesem werden die aus der Schneidmaschine 2 kommenden Restteile 13 gelegt, die in das Materiallager 1 zurückgeführt werden.

- Einen Rezyklierteilebehälter 10: In diesen Behälter werden die Restteile gelegt, die in der vorliegenden Anlage nicht wiederverwendet werden und daher in ein externes Material-Recyclng zurückgegeben werden.

- Eine Bildkamera 12: Gemäss der besonderen Ausführungsart 2 hat die vorliegende Anlage auch eine Bildkamera 11 zum Überprüfen des Restteils 14.

- Ein Ausgabegerät 16: Dieses zeigt den Materiallager-Entnahmebefehl des Rechners 3 zu einem Schneidauftrag an.

Auf dieser Anlage sind die nachfolgende beschriebenen Verfahren zur Materialflusssteuerung implementiert. Anzumerken ist, dass für die Erfindung nicht alle oben angegebenen I<omponenten zwingend sind. Insbesondere können Ausgabegeräte weggelassen werden, wenn der Materialfluss-Steuerbefehl oder der Materiallager-Entnahmebefehl direkt an eine Transportsystemsteuerung übergeben werden, die die maschinelle Be- und Entladung der Schneidmaschine bzw. des Materiallagers steuert. Auch die Auftragsklassen-Datenbank und die Restteil-Datenbank sind bei besonderen Ausführungsarten der Erfindung nicht zwingend erforderlich.

Anhand der Fig. 1 wird nun kurz der grundsätzliche Materialfluss erläutert:

1. Aus dem Materiallager 1 wird eine Bearbeitungsplatte 15 entnommen. Es handelt sich um eine Standardplatte oder eine Restteilplatte, je nachdem, was am Ausgabegerät 16 angezeigt wird. Der angezeigte Materiallager-Entnahmebefehl wird vom Rechner 3 erzeugt. Der Materiallager-Entnahmebefehl wird z.B: von einem Operateur gelesen und ausgeführt. Bei einem automatisierten Materiallager veranlasst eine Transportsystem-Steuerung das Transportsystem den Materiallager-Entnahmebefehl umzusetzen durch Entnahme der verlangten Standardplatte oder Restteilplatte.

2. Die Bearbeitungsplatte 15 wird mit dem Transporter 5.1 zur Schneidmaschine 2 gebracht.

3. Die Schneidmaschine 3 (z.B. eine Laserschneidmaschine) schneidet die Nutzteile 13 gemäss den vom Rechner 3 generierten Schnittdaten aus der Bearbeitungsplatte 15.

4. Entsprechend der besonderen Ausführungsart 2 wird der geschnittene Bearbeitungsteil mit der Bildkamera 12 erfasst. Dies kann noch auf dem Schneidtisch der Schneidmaschine erfolgen oder bevor bzw. wenn der Restteil 14 in den Restteilbehälter 9 gegeben wird.

5. Beim Entladen der Schneidmaschine 3 werden die Nutzteile 13 in den Nutzteilbehälter 8 gelegt und der Restteil 14 wird entweder in den Restteilbehälter 9 oder in den Rezyklierbehälter 10 gelegt. (In der Praxis sind die Nutzteile häufig noch nicht vollständig ausgeschnitten, so dass die geschnittene Bearbeitungsplatte zuerst einfach aus der Schneidmaschine entnommen werden kann samt Nutzteilen. Das Ausbrechen der Nutzteile erfolgt erst quasi als Zusatzschritt nach dem Herausnehmen der geschnittenen Bearbeitungsplatte aus der Schneidmaschine 3.) Ob der Restteil 14 rezykliert oder wiederverwendet wird, hängt vom Materialfluss-Steuerbefehl ab, den der Rechner 3 ermittelt und am Ausgabegerät 11 anzeigt. Wenn die Schneidmaschine manuell entladen wird, liest der Operateur den Materialfluss-Steuerbefehl am Ausgabegerät 11 ab und führt ihn aus. Bei einer automatisierten Anlage wird das Entladen von einem Transportsystem ausgeführt, das entsprechend dem Materialfluss-Steuerbefehl aktiviert wird.

6. Der Transporter 5.2 bringt den Restteilbehälter 10 zum Materiallager 1, wo die Restteile in die passenden Lagerfächer abgelegt werden. Das Ausgabegerät 16 kann anzeigen, in welche Lagerfächer die vom Transporter 5.2 herangeführten Restteile eingelagert werden sollen. Der Lager-Operateur ordnet die Restteile entsprechend den angezeigten Vorgaben ein.

7. Die nicht-wiederverwendbaren Restteile im Rezyklierteilebehälter 10 werden aus der Anlage hinausgebracht.

Wie erkennbar ist, wird ein Teil des Materials wiederverwendet. Entscheidend ist, dass nicht jeder Restteil wiederverwendet wird, weil sonst das Materiallager schnell überfüllt wird. Der Entscheid, welche Restteile wiederverwendet werden, ist im Rahmen der Erfindung dynamisch und nicht statisch. Das heisst, es wird nicht ein konstantes I<riterium angewendet, wie es der Fall wäre, wenn z.B.: Restteile unter 20 x 20 cm$^2$ stets rezykliert und alle grösseren Teile stets wiederverwendet würden. Vielmehr wird für jeden Schneidauftrag erneut errechnet, ob der konkret resultierende Restteil ins Materiallager zurückgeführt wird oder nicht.

Im Rahmen der Erfindung wird für jeden Restteil und auf den aktuellen Zeitpunkt bezogen berechnet, ob er innerhalb eines vorgegebenen Zul<unftszeitraums mit ausreichender Prognose wiederverwendet werden wird.

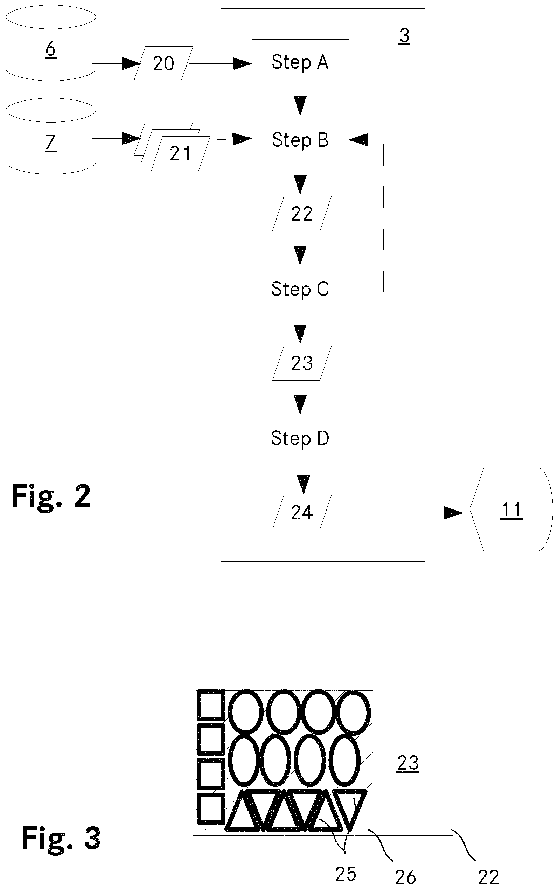

**Fig. 2** veranschaulicht die Schritte zur Materialflusssteuerung in der Anlage und die Struktur der benötigten Daten.

Step A: Aktuellen Schneidauftrag erfassen: Der Rechner 3 greift den aktuellen Schneidauftrag 20 aus der Auftragsdatenban< 6 ab. Dabei enthält der Schneidauftrag 20 zumindest folgende Parameter:

a) technische Materialeigenschaften: Materialart (z.B. Edelstahl, Messing, Silber) und Oberflächenbeschaffenheit (z.B. poliert, gebürstet, beschichtet);
b) Geometrische Form der Nutzteile: Flächenkontur, Dicke;
c) Anzahl Nutzteile, insbesondere Anzahl jeweils identischer Nutzteile.

In der Datenbank können zum Schneidauftrag 20 noch weitere Daten gespeichert sein wie z.B. Eingangsdatum des Auftrags, vereinbartes Auslieferungsdatum des Auftrags, Einheitsl<osten des Materials. Diese weiteren Daten sind hier aber nicht von Belang.

Step B: Bearbeitungsteil aus Materiallagerdatenban< wählen:

(i) Der Rechner 3 ermittelt aus den Auftragsdaten 20 die für die Herstellung der Nutzteile minimal benötigte Plattenfläche. Die minimal benötigte Plattenfläche kann bei grösseren Nutzteilformen z.B. die für einen Nutzteil benötigte rechteckige Plattenfläche sein. Bei kleinen Nutzteilformen kann der Rechner z.B. die für eine minimale Anzahl (z.B. 10) von Nutzteilen benötigte rechteckige Fläche als minimal benötigte Plattenfläche festlegen.

(ii) Der Rechner 3 sucht in der Materiallagerdatenban< 7 nach Restteil-Datensätzen 21, die die minimal benötigte Plattenfläche aufweisen. Falls es einen oder mehrere passende Restteil-Datensätze 21 gibt, wählt der Rechner 3 z.B. den ältesten Restteil-Datensatz und definiert ihn als Bearbeitungsteil 22. Gibt es keinen passenden Restteil-Datensatz, wählt der Rechner 3 einen Standardteil-Datensatz und definiert ihn als Bearbeitungsteil 22. Als Standardteil wird hier eine Platte verstanden, die neu ist und noch nie in der Anlage verarbeitet worden ist. Ein Standardteil wird im Handel eingel<auft und hat die entsprechend erhältliche Grösse (Standardgrösse z.B., 2x2 m$^2$).

Step C: Nutzteile auf Bearbeitungsteil anordnen: Der Rechner 3 ordnet zumindest einen Teil der Nutzteile des aktuellen Schneidauftrags 20 auf dem Bearbeitungsteil 22 an. Wenn nicht alle Nutzteile auf dem im ersten Durchgang ermittelten Bearbeitungsteil 22 angeordnet werden, dann werden der Step B und der Step C für die noch nicht angeordneten Nutzteile wiederholt durchlaufen, bis alle Nutzteile des Schneidauftrags 20 auf einem Bearbeitungsteil angeordnet sind.

Auf dem gewählten Bearbeitungsteil 22 ordnet der Rechner 3 die Nutzteile so an, dass eine zusammenhängende Fläche besetzt wird. Das heisst, zwischen benachbarten Nutzteilformen sind die Abstände so klein wie möglich. Damit kann der Bearbeitungsteil 22 in einen benutzten Flächenbereich und einen unbenutzten Flächenbereich aufgeteilt werden. Der unbenutzte Flächenbereich ist in der Regel im Wesentlichen mit einer einzigen Rechteckform oder zwei zusammenhängenden Rechtecl<formen abdeckbar. Der unbenutzte Flächenbereich wird als Restteil 23 definiert.

**Fig. 3** veranschaulicht die Aufteilung des Bearbeitungsteils 22. Die Auftragsdaten definieren z.B. 18 Nutzteile mit 4 verschiedenen Nutzteilformen 23: Beispielsweise sind es 4 Quadrate, 6 Dreiecke, 4 kleine Ellipsen und 4 grosse Ellipsen. In Step C werden diese 18 Nutzteilformen optimal auf der Fläche des Bearbeitungsteils 22 angeordnet, so dass ein möglichst grosser Restteil 23 verbleibt. Der Bearbeitungsteil 22 weist nun eine mit Nutzteilformen 25 besetzte Fläche 26 (die auch als Restgitter bezeichnet wird) und eine nicht-benutzte Fläche als Restteil 23 auf. Verfahren zum optimal flächensparenden Anordnen von zweidimensionalen Formen auf einer Fläche sind dem Fachmann bekannt. Im Rahmen der Erfindung werden diese Verfahren mit der Vorgabe durchgeführt, dass die verbleibende nicht-benutzte Fläche z.B. ein Rechteck oder eine I<ombination von zwei verschiedenen, Rechtecken mit einer gemeinsamen Seite bildet.

Step D: Materialfluss-Steuerbefehl erzeugen: Der Rechner ermittelt schliesslich den Materialfluss-Steuerbefehl 24. Dieser wird z.B. am Ausgabegerät 11 angezeigt. Alternativ kann er an ein Entladesystem der Schneidmaschine 2 ausgegeben werden, das den Materialfluss-Steuerbefehl automatisch umsetzt. Der Materialfluss-Steuerbefehl gibt an, ob der Restteil aus dem aktuellen Schneidauftrag wiederverwendet und deshalb ins Materiallager gebracht werden soll (Fig. 1 Restteilbehälter 9), oder ob der Restteil rezykliert wird (Fig. 1 Rezyklierteilebehälter 10).

Nachfolgend wird anhand von Beispielen erläutert, wie der Materialfluss-Steuerbefehl 24 errechnet werden kann.

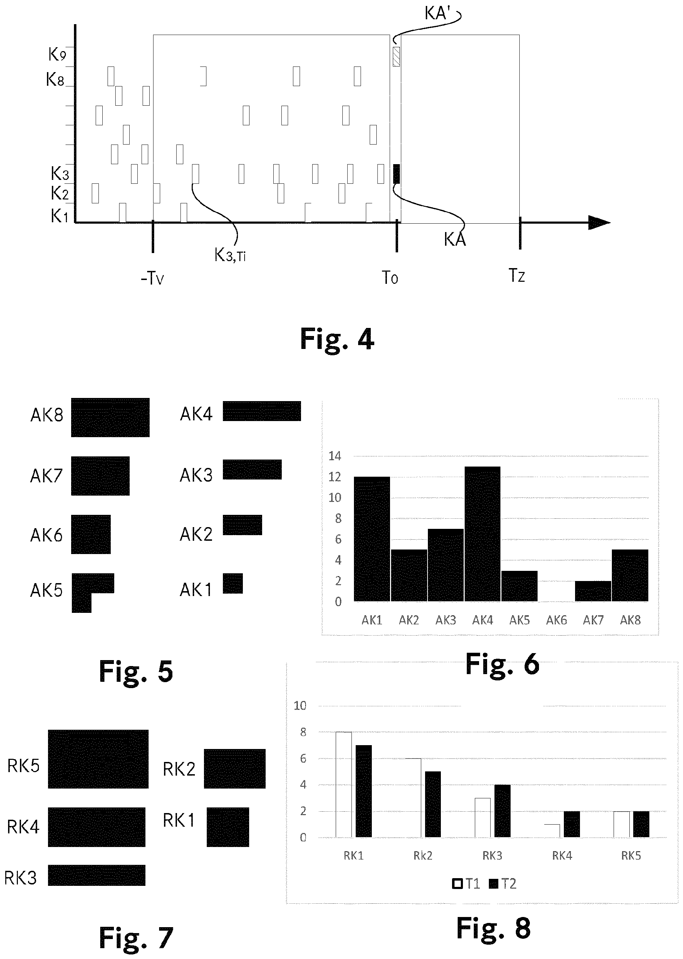

**Fig. 4** veranschaulicht den Grundgedanken der Erfindung. Auf der X-Achse ist die Zeit dargestellt. Mit $T_0$ ist der aktuelle Zeitpunkt definiert, das heisst der Zeitpunkt zu dem der Rechner 3 für einen bestimmten aktuellen Schneidauftrag (siehe Step A) den Materialfluss-Steuerbefehl gemäss Step D erzeugt. Der Materialfluss-Steuerbefehl ist also vom aktuellen Zeitpunkt abhängig und ist dem aktuellen Schneidauftrag zugeordnet.

$T_V$ ist der Beginn des Vergangenheitszeitraums $[T_V, T_0]$. $T_Z$ ist das Ende des Zul<unftszeitraums $[T_0, T_Z]$.

Auf der Ordinate sind schematisch verschiedene Schneidaufträge $K_1$, $K_2$ ...$K_9$ aufgelistet. Diese treten zu zufälligen Zeitpunkten auf. In Fig. 3 ist beispielhaft der Schneidauftrag $K_{3,Ti}$ identifiziert. Zum Beispiel gab es den Auftrag $K_3$ im Vergangenheitszeitraum $[T_V, T_0]$ sechsmal. Dagegen gab es den Auftrag $K_9$ im gleichen Vergangenheitszeitraum kein Mal. Wenn nun ein Restteil KA resultiert, der nur mit Schneidaufträgen K3 wiederverwertet werden kann, dann ist es angesichts der ausgeführten Schneidaufträge K3 wahrscheinlich, dass dieser Restteil KA im Zul<unftszeitraum wiederverwendet werden kann. Falls der Restteil KA' dagegen nur mit Schneidaufträgen I<9 wiederverwertet werden kann, dann ist es angesichts der bisher nicht vorhandenen Schneidaufträge I<9 wenig wahrscheinlich, dass dieser Restteil 1<A' im Zul<unftszeitraum wiederverwendet werden kann.

Gemäss einer besonderen Ausführungsart der Erfindung werden die in der Vergangenheit (z.B. im Vergan-genheitszeitraum $[T_V, T_0]$) verarbeiteten Schneidaufträge nach Materialeigenschaften und Nutzteilform klassiert.

**Fig. 5** veranschaulicht die Auftragsklassen hinsichtlich verschiedener Standardformen. Es handelt sich bei den Standardformen um einfache geometrische Formen wie z.B: Rechtecke und L-Formen unterschiedlicher Grösse. In Fig. 5 sind acht Auftragsklassen AI<1 - AI<8 gezeigt. Die Auftragsklasse AK1 (Einheiten Länge x Breite: 1x1) für die kleinste Standardform stellt z.B. die kleinste verarbeitbare Form dar. Alle Schneidaufträge mit Nutzteilen, die in diese kleinste Form passen, werden der Auftragsklasse AK1 zugeordnet. In die Auftragsklasse AI<2 mit der nächstgrösseren Standardform (Einheiten Länge x Breite: 2x1) werden alle Schneidaufträge eingeordnet, die in die Standardform dieser Auftragsklasse AI<2 aber nicht in die Standardform der nächst kleineren Auftragsklasse AI<1 passen. In dieser Weise können alle Schneidaufträge in die vordefinierten Auftragsklassen AK1 bis AI<8 eingeordnet werden.

Wie viele Auftragsklassen pro Material definiert werden, hängt vom Einzelfall ab. In den meisten Anwendungen wird man mit mindesten 5 und nicht mehr als 50 Auftragsklassen pro Materialeigenschaft auskommen. Wenn die Zahl an Schneidaufträgen 1'000 oder 10'000 übersteigt, wird sich auf diese Weise eine starke Reduktion der erforderlichen Rechenleistung im Step D erreichen lassen.

**Fig. 6** illustriert mit einem Histogramm ein mögliches Resultat der Klassierung der Schneidaufträge zu einem bestimmten Zeitpunkt $T_0$. Die Auftragsklassen sind unterschiedlich stark gefüllt. Mit jedem neuen ausgeführten Schneidauftrag verändert sich die Häufigkeitsverteilung. Gemäss einer besonderen Ausführungsart der Erfindung ist der Vergangenheitszeitraum immer gleich lang. Das heisst, in der Auftragsklassen-Datenbank werden Schneidaufträge inaktiviert oder gelöscht, die vor dem Zeitpunkt $T_V$ liegen. Die Auftragsklassen-Datenbank ist also dynamisch.

Die Auftragsklassen-Datenbank wird in regelmässigen Zeitintervallen aktualisiert (z.B. täglich).

Im Sinn der oben genannten besonderen Ausführungsart der Erfindung werden auch die in der Vergangenheit (z.B. im Vergangenheitszeitraum $[T_V, T_0]$) in das Materiallager zurückgeführten Restteile nach Materialeigenschaften und Form klassiert.

**Fig. 7** veranschaulicht die Restteilklassen hinsichtlich verschiedener Standardformen. Es handelt sich bei den Standardformen um einfache geometrische Formen wie z.B. Rechtecke mit unterschiedlichen Seitenlängen und somit unterschiedlicher Grösse. In Fig. 7 sind beispielhaft fünf Restteil<lassen RI<1 - RI<5 gezeigt. Die Restteilklasse RI<1 (2x2: 2 Längeneinheiten in der Breite und 2 Längeneinheiten in der Länge) für die kleinste Standardform stellt z.B. die kleinste wiederverwendbare Form eines Restteils dar. Alle Restteile, die mindestens eine solche zusammenhängende freie Fläche haben, aber noch nicht die Flächenanforderung der Restteilklasse RI<2 (2x3) erfüllen, werden der Restteilklasse AI<1 zugeordnet. In die Restteilklasse RI<2 mit der nächstgrösseren Standardform (2x3) werden alle Restteile eingeordnet, die mindestens eine zusammenhängende Fläche 2x3 haben, nicht aber die Flächenanforderung der nächst grösseren Restteilklasse RI<3 (5x1) erfüllen. In dieser Weise können alle Restteile in die vordefinierten Restteil<lassen RK1 bis RI<5 eingeordnet werden.

Generell gilt folgendes: Die grösste Restteilklasse RI<5 (Grösse in Bezug auf die Fläche gerechnet) ist kleiner als die Standardform der Rohmaterialplatten des jeweiligen Materials.

In vielen Anwendungsfällen wird zudem die grösste Restteilklasse (in Fig. 7: RK5) grösser als die grösste Auftragsklasse (in Fig. 7: AI<8) sein. Dies gilt in Fällen, in denen die grössten Formen in den Schneidaufträgen deutlich kleiner als die Standardform der Rohmaterialplatten ist. Ist diese Bedingung erfüllt, kann für jeden Schneidauftrag grundsätzlich eine Standardplatte oder eine Restteilplatte als Bearbeitungsteil in Frage kommen. Es kann natürlich sein, dass gerade keine passende Restteilplatte im Materiallager vorhanden ist. Dann wird eine Standardplatte als Bearbeitungsplatte hergenommen.

Wie viele Restteilklassen pro Material definiert werden, hängt vom Einzelfall ab. Unabhängig von den vorliegenden Ausführungsbeispielen kann festgehalten werden, dass man in den meisten Anwendungen mit mindesten 4 und nicht mehr als 20 Restteilklassen pro Materialeigenschaft auskommen kann. Pro Materialeigenschaft sind vorzugsweise weniger Restteilklassen als Auftragsklassen definiert. Beispielsweise gibt es mindestens fünfmal mehr, insbesondere zehnmal mehr Auftragsklassen als Restteilklassen.

**Fig. 8** illustriert mit einem Histogramm ein mögliches Resultat der Klassierung der Restteile zu zwei verschiedenen Zeitpunkten $T_1$ und $T_2$. Die Restteilklassen RK1, ..., RK5 sind unterschiedlich stark gefüllt. Mit jedem neuen ausgeführten Schneidauftrag kann sich die Häufigkeitsverteilung ändern: Einerseits kann ein Restteil aus der Materiallagerdatenbank entnommen und endgültig aufgebraucht sein. Andererseits kann ein neuer (z.B. kleinerer) Restteil zurückgeführt werden. Oder es kann aus einem Standardmaterialteil ein wiederverwendbarer Restteil resultieren.

In der Restteilklassen-Datenbank werden Restteile solange gespeichert, wie sie im Materiallager vorhanden sind.

Wenn die Anlage optimal eingestellt ist, ist das Materiallager hinsichtlich der Restteile nie ganz voll. Vielmehr existiert ein ständiger Fluss an Restteilen durch das Materiallager. Insbesondere soll der Materialfluss so gross wie möglich sein. Dies ist Ausdruck davon, dass die Restteile, die eingelagert werden, optimal verwertet werden.

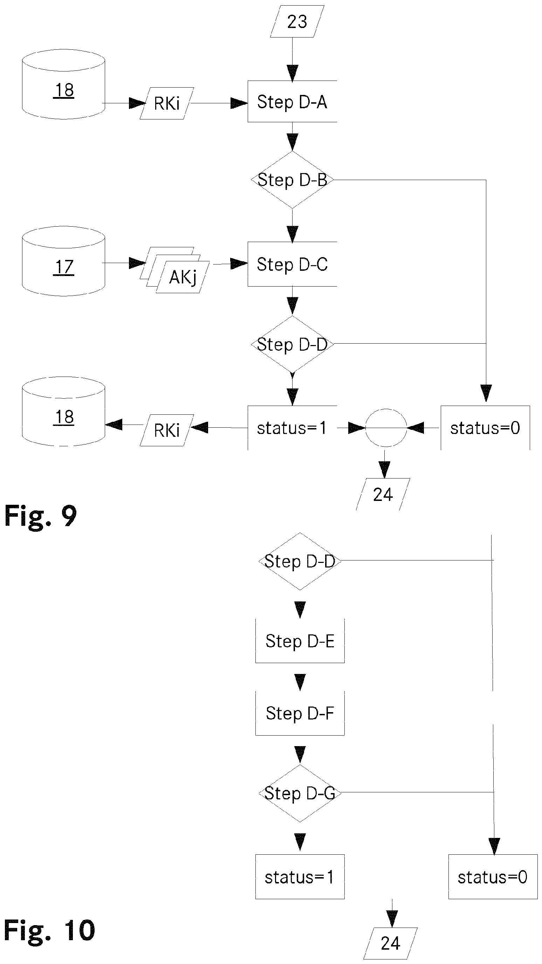

**Fig. 9** veranschaulicht eine erste Ausführungsform zum Ermitteln des Materialfluss-Steuerbefehls 24 in Step D der Fig. 2. Aus dem vorhergehenden Step C wird der Restteil 23 übernommen.

| | |
|---|---|
| Step D-A: | Ermitteln der Restteilklasse RI<i: in der Restteilklassen-Datenbank 17 wird die Restteilklasse RKi ermittelt, zu welcher der errechnete Restteil 23 zuzuordnen ist. |
| Step D-B: | Ermitteln, ob Restteilklasse RKi voll: Wenn die Restteilklasse 17 voll ist (d.h. wenn der Materiallager-Bereich voll ist, in welchem die Restteile dieser Restteilklasse gelagert werden), dann wird der Materialfluss-Steuerbefehl auf «rezyklieren» (Fig. 9: «status = 0») gesetzt. Das heisst, der Restteil 23 wird nach dem Schneidprozess in den Rezyklierteilebehälter 10 gelegt. |
| Step D-C: | Auftragsklassen zu Restteilklasse RKi ermitteln: Nun wird mit Hilfe der Auftragsklassen-Datenbank 17 ermittelt, welche Auftragsklassen AI<j in der Restteilklasse RKi untergebracht werden können. Beispielsweise können in der Restteilklasse RI<2 gemäss Fig. 7 die Auftragsklassen AK1, AI<2, AI<3, AI<5, AI<6, AI<7 untergebracht werden. Das heisst, alle Nutzteilformen der Schneidaufträge, die in den ermittelten Auftragsklassen enthalten sind, können auf dem Restteil untergebracht werden. |
| Step D-D: | Materialfluss in Auftragsklassen: Falls in allen gemäss Step D-C ermittelten Auftragsklassen im Vergangenheitszeitraum $[T_V, T_0]$ keine Schneidaufträge hinzugekommen sind, wird der Materialfluss-Steuerbefehl 24 auf «rezyklieren» gesetzt (Fig. 9: «status = 0»). Anderenfalls wird der Materialfluss-Steuerbefehl 24 auf «einlagern» (Fig. 9: «status = 1») gesetzt. Zudem wird beim Status «einlagern» die Restteilklassen-Datenbank 18 in Bezug auf die Restklasse RKi aktualisiert. |

Für die oben beschriebene Ausführungsform wird vorausgesetzt, dass der berücksichtigte Vergangenheitszeitraum $[T_V, T_0]$ gemäss Fig. 4: im Wesentlichen gleich gross ist wie der Zul<unftszeitraum $[T_0, T_Z]$. Der Zul<unftszeitraum beträgt beispielsweise 6 Monate.

**Fig. 10** illustriert ein zweites Ausführungsbeispiel zum Ermitteln des Materialfluss-Steuerbefehls 24 in Step D der Fig. 2. Bei diesem ist der Vergangenheitszeitraum im Vergleich zum Zul<unftszeitraum viel grösser, insbesondere mindestens um einen Faktor zehn. Wenn beispielsweise der Zul<unftszeitraum 6 Monate ist, dann ist der Vergangenheitszeitraum ca. 5 Jahre.

Die zweite Ausführungsform basiert auf den im Vergangenheitszeitraum ausgeführten Schneidaufträgen. Aus diesen wird ermittelt, ob die Prognose, dass der Restteil bis zum Ende des Zul<unftszeitraums wiederverwertet werden kann, eine gewählte Untergrenze überschreitet.

**Fig. 10** basiert auf Step D-A bis Step D-D der Fig. 9 führt aber nach Step D-D nicht direkt zum «status=1», sondern führt folgende zusätzlichen Schritte aus:

| | |
|---|---|
| Step D-E: | Unterteilen des Vergangenheitszeitraums in Zeitintervalle: Der Vergangenheitszeitraum $[T_V, T_0]$ wird in eine vordefinierte Anzahl I< von Zeitintervallen der Länge $(T_0-T_V)/K$ zerlegt: Zeitintervall k=1: $[T_V, T_V+(T_0-T_V)/K]$ |

(fortgesetzt)

Zeitintervall l<=2: $[T_V+(T_0-T_V)/K,-T_V+2(T_0-T_V)/K)]$

...,

Zeitintervall k=K: $[T_V+(K-1)(T_0-T_V)/K), T_0]$

Beispielsweise wird ein Vergangenheitszeitraum von 2 Jahren in K = 12 Zeitintervalle von 2 Monaten unterteilt. Für jedes Zeitintervall werden die Anzahl $N_k$ ausgeführten Schneidaufträge gezählt, die in eine der ermittelten Auftragsklassen AI<j aus Step D-D fallen. Es resultiert eine Zeitreihe $N_1$, ..., $N_K$ (quasi ein Messwert pro Zeitintervall).

Step D-F: Wiederverwertungsprognose durch Trendermittlung: Aus den gemäss Step D-E reduzierten Daten wird der Trend für den Zul<unftszeitraum $T_Z$ ermittelt. Dazu wird ein Schätzwert $N(T_0+h|T_0)$ mit folgender Formel errechnet:

$$\widehat{N_{T0+h|T0}} = N_K + h\left(\frac{N_K - N_1}{K-1}\right)$$

wobei:

$$h = \frac{T_Z - T_0}{T_0 - T_V} \times K$$

Step D-G: Vergleich der Wiederverwertungsprognose mit einem Schwellwert: Der im Step D-F errechnete Schätzwert $N(T_0+h|T_0)$ wird mit einem vorgegebenen Schwellwert $S(RI<i)$ der Restteilklasse RKi verglichen. Liegt der Schätzwert unter dem Schwellwert, dann wird der Materialfluss-Steuerbefehl 24 auf «rezyklieren» gesetzt (Fig. 10: «status = 0»). Anderenfalls wird der Materialfluss-Steuerbefehl 24 auf «einlagern» (Fig. 10: «status = 1») gesetzt. Zudem wird beim Status «einlagern» die Restteilklassen-Datenbank 18 in Bezug auf die Restklasse RKi aktualisiert.

Gemäss einer besonderen Ausführungsart haben nicht alle Restteilklassen denselben Schwellwert. So kann z.B. bei einer Restteilklasse der Schwellwert höher als der Durchschnitt aller Schwellwerte der Restteilklassen angesetzt sein, wenn z.B. das Einlagern der entsprechenden Restteile besonders aufwändig ist.

Eine dritte Ausführungsform besteht darin, dass in Step D-F ein lineares Trendberechnungsmodell zugrunde gelegt wird:

$$\widehat{N_{K+1|K}} = \sum_{i=0}^{p} a_i\, N_{K-i}$$

Die Parameter $a_i$ werden über die sogenannten Yule-Walker-Gleichungen bestimmt. Die dabei anzuwendende Autokorrelationsmatrix wird aus den Messwerten $N_i$ geschätzt. Der Parameter p wird hinreichend gross gewählt.

Die oben beschriebenen Verfahren können dahingehend abgewandelt werden, dass auf die Klassierung quasi verzichtet wird:

- In Bezug auf die Restteilklassen wird das bei den die obigen Beispiele im Wesentlichen dadurch erreicht, dass für jeden möglichen Restteil eine separate Restteilklasse definiert wird. Nur identische Restteile werden dann in derselben Restteil-I<lasse eingeordnet.
- In Bezug auf die Auftragsklassen wird das bei den obigen Beispielen im Wesentlichen dadurch erreicht, dass für jeden ausgeführten Schneidauftrag eine separate Auftragsklasse definiert wird. Nur identische Nutzteilformen und Nutzteilmaterialien werden dann in derselben Auftragsklasse eingeordnet.

Eine weitere Abwandlung der Berechnung des Materialfluss-Steuerbefehls besteht darin, dass er immer dann auf «einlagern» gesetzt wird, wenn im Vergangenheitszeitraum ausgeführte Schneidaufträge in ausreichender Anzahl vorhanden sind. Beispielsweise wird der Status «einlagern» gesetzt, wenn im Vergangenheitszeitraum $[T_V,T_0]$ die Anzahl ausgeführter Schneidaufträge mindestens den Schwellwert $S(RI<i)$ erreicht (z.B. $S(RI<i) = 2$). Die Schritte gemäss Step D-A bis D-D vereinfachen sich entsprechend.

Um die Formenvielfalt der Restteile zu minimieren, kann für den unbenutzten Flächenbereich des Bearbeitungsteils eine Rechteckform vorgeschrieben werden. Das heisst, der Restteil kann über Länge und Breite definiert werden. Fig. 3 zeigt ein Beispiel dafür.

Vorteilhaft kann es aber auch sein, wenn Formen zugelassen sind, die sich aus zwei aneinander anschliessenden Rechtecken bilden lassen. Dazu gehören insbesondere L-Formen im weitesten Sinn. Für eine maximale Materialausnutzung ist es dagegen von Vorteil, wenn beliebige I<onturen zugelassen werden z.B. I<onturen, die sich dadurch ergeben, dass aus der Bearbeitungsplatte die Nutzteile entfernt sind.

Es kann aber auch eine beliebige Drei- oder Viereckform oder eine beliebige Sechseckform als zulässige Form des Restteils definiert sein.

Zusammenfassend ist festzustellen, dass die Erfindung eine automatisierte Optimierung des Materialflusses mit einem reduzierten Rechenaufwand ermöglicht.

**Bezugszeichen:**

| 1 | Materiallager |
|---|---|
| 2 | Schneidmaschine |
| 3 | Rechner |
| 4 | Datenverbindung |
| 5.1,5.2 | Transporter |
| 6 | Auftragsdatenbanl< |
| 7 | Materiallagerdatenbank |
| 8 | Nutzteilbehälter |
| 9 | Restteilbehälter |
| 10 | Rezyklierteilebehälter |
| 11 | Ausgabegerät |
| 12 | Bildkamera |
| 13 | Nutzteile |
| 14 | Restteil |
| 15 | Bearbeitungsplatte |
| 16 | Ausgabegerät |
| 17 | Auftragsklassen-Datenbank |
| 18 | Restteilklassen-Datenbank |
| | |
| 20 | Schneidauftrag |
| 21 | Restteil-Datensatz |
| 22 | Bearbeitungsteil |
| 23 | Restteil |
| 24 | Materialfluss-Steuerbefehl |
| 25 | Nutzteilformen |
| 26 | Besetzte Fläche |
| AK1, ..., AI<8, AKj | Auftragsklassen |
| RI<1, ..., RI<5, RKi | Restteilklassen |
| K1, ..., K9 | Schneidauftrag |
| KA | Restteil |
| $T_0$ | Aktueller Zeitpunkt |
| $T_V$ | Vergangenheitszeitpunl<t |
| $T_Z$ | Zul<unftszeitpunl<t |

**Patentansprüche**

1. Anlage
   geeignet, um eine Vielzahl von unterschiedlichen und zu unregelmässigen Zeitpunkten auftretenden Schneidaufträgen im Wesentlichen sequentiell abzuarbeiten,

   mit folgenden Komponenten:

   a) Eine Schneidmaschine (2) zum Schneiden von Nutzteilen (13) aus einem Standardmaterialteil oder einem wiederverwendbaren Restteil;
   b) ein Materiallager (1) mit Standardmaterialteilen und wiederverwendbaren Restteilen;

c) einen Rechner (3);
d) Datenbanken, nämlich

    i. eine Auftragsdatenbanl< (6) mit Daten von in der Vergangenheit ausgeführten Schneidaufträgen,
    ii. eine Materiallagerdatenbanl< (7) mit Daten von Standardteilen und Restteilen,
    iii. eine Auftragsklassendatenbank (17) mit Daten zu Klassen von Schneidaufträgen,
    iv. eine Restteilklassendatenbank (18) mit Daten zu Klassen von Restteilen,

wobei der Rechner (3), insbesondere zum Verbessern der Materialausnutzung, für einen aktuellen Schneidauftrag,
der zumindest ein zu produzierendes Nutzteil mit geometrischer Form, Materialeigenschaften und Anzahl Nutzteile als technische Nutzteildaten beinhaltet,
zumindest folgende Schritte durchführt:

    e) Auswählen eines Bearbeitungsteils (Step B) aus der Materiallagerdatenbanl<, indem

        i. entweder ein wiederverwendbarer Restteil als Bearbeitungsteil ausgewählt wird, so dass aus dem Restteil zumindest ein Nutzteil des aktuellen Schneidauftrags produziert werden kann;
        ii. oder ein Standardteil als Bearbeitungsteil ausgewählt wird, sofern kein wiederverwendbarer Restteil für den aktuellen Schneidauftrag vorhanden ist;

    f) Optimiertes Anordnen (Step C) zumindest eines Teils der zu produzierenden Nutzteile des aktuellen Schneidauftrags auf dem Bearbeitungsteil, so dass der Bearbeitungsteil geometrisch zweigeteilt ist in einen zusammenhängenden Bereich mit Nutzteilen und einen zusammenhängenden Restteil ohne Nutzteile;
    g) Erzeugen eines Materialfluss-Steuerbefehls (Step D) für den Restteil, wobei der Materialfluss-Steuerbefehl mindestens zwei Zustände zum Steuern eines Materialflusses einnehmen kann, nämlich ein Zustand, der ein einlagern signalisiert und ein Zustand der ein rezyklieren signalisiert,
    h) wobei für einen definierten Zul<unftszeitraum (TZ) ab Zeitpunkt des aktuellen Schneidauftrags (T0) folgende Schritte durchgeführt werden:

        i. Einordnen der in der Vergangenheit ausgeführten Schneidaufträge in vorgegebene Auftragsklassen der Auftragsklassen-Datenbank;
        ii. Einordnen der in der Restteile der Materiallagerdatenbank in vorgegebene Restteilklassen der Restteilklassen-Datenbank;
        iii. Berechnen einer Wiederverwendungs-Prognose per Ende des Zul<unftszeitraums für den Restteil unter Verwendung der Daten aus der Auftragsdatenbanl< und der Auftragsklassen-Datenbank sowie der Daten aus der Materiallager-Datenbank und der Restklassen-Datenbank;
        iv. Vergleichen der Wiederverwendungs-Prognose mit einer Untergrenze;
        v. Erzeugen des Zustands einlagern, wenn die Wiederverwendungs-Prognose mindestens so gross wie die Untergrenze ist oder Erzeugen des Zustands rezyklieren, wenn die Wiederverwendungs-Prognose unter der Untergrenze ist;
        vi. Aktualisieren der Materiallagerdatenbanl<, sofern für den Restteil der Materialfluss-Steuerbefehl den Zustand einlagern hat;
        vii. Einfügen des aktuellen Schneidauftrags in die Auftragsdatenbanl<;

wonach in der Anlage der gemäss Schritt e) vom Rechner ausgewählte Bearbeitungsteil aus dem Materiallager zur Schneidmaschine gebracht wird, die Schneidmaschine die Nutzteile aus dem Bearbeitungsteil schneidet und der Restteil gemäss dem Materialfluss-Steuerbefehl entweder in das Materiallager eingelagert wird oder recycliert wird.

2. Anlage nach Anspruch 1, **dadurch gekennzeichnet, dass** sie ein optisches Erfassungsgerät (12) aufweist, das datentechnisch mit dem Rechner (3) verbunden ist und das nach dem Schneiden der Nutzteile (13) aus dem Bearbeitungsteil ein Bild vom geschnittenen Bearbeitungsteil erfasst, und dass der Rechner (3) den berechneten Restteil anhand des Bildes verifiziert und falls nötig korrigiert.

3. Anlage nach einem der Ansprüche 1 oder 2, **dadurch gekennzeichnet, dass** der Rechner beim Berechnen einer Wiederverwendungs-Prognose per Ende des Zul<unftszeitraums für den Restteil nur Daten aus der Auftragsdatenbanl< berücksichtigt, die innerhalb eines vorgegebenen Vergangenheitszeitraums liegen.

**4.** Anlage nach einem der Ansprüche 1 bis 3, **dadurch gekennzeichnet, dass** der Materialfluss-Steuerbefehl auf rezyklieren gesetzt wird, falls das Materiallager für die Restteile voll ist.

**5.** Anlage nach einem der Ansprüche 1 bis 4, **dadurch gekennzeichnet, dass** für Restteile unterschiedlicher Materialeigenschaften unterschiedliche Untergrenzen zum Ermitteln des Materialfluss-Steuerbefehls vorhanden sind.

**6.** Anlage nach einem der Ansprüche 1 bis 5, **dadurch gekennzeichnet, dass** beim Schneiden der Bearbeitungsteil zweigeteilt wird in einen zusammenhängenden Bereich mit Nutzteilen und einen zusammenhängenden Restteil ohne Nutzteile.

**7.** Anlage
geeignet, um eine Vielzahl von unterschiedlichen und zu unregelmässigen Zeitpunkten auftretenden Schneidaufträgen im Wesentlichen sequentiell abzuarbeiten,

mit folgenden Komponenten:

a) Eine Schneidmaschine zum Schneiden von Nutzteilen aus einem Standardmaterialteil oder einem wiederverwendbaren Restteil;
b) ein Materiallager mit Standardmaterialteilen und wiederverwendbaren Restteilen;
c) einen Rechner;
d) Datenbanken, nämlich

i. eine Auftragsdatenbanl< mit Daten von in der Vergangenheit ausgeführten Schneidaufträgen,
ii. eine Materiallagerdatenbanl< mit Daten von Standardteilen und Restteilen,

wobei der Rechner, insbesondere zum Verbessern der Materialausnutzung, für einen aktuellen Schneidauftrag, der zumindest ein zu produzierendes Nutzteil mit geometrischer Form, Materialeigenschaften und Anzahl Nutzteile als technische Nutzteildaten beinhaltet,
zumindest folgende Schritte durchführt:

e) Auswählen eines Bearbeitungsteils aus der Materiallagerdatenbanl<, indem

i. entweder ein wiederverwendbares Restteil als Bearbeitungsteil ausgewählt wird, so dass aus dem Restteil zumindest ein Nutzteil des aktuellen Schneidauftrags produziert werden kann;
ii. oder ein Standardteil als Bearbeitungsteil ausgewählt wird, sofern kein wiederverwendbares Restteil für den aktuellen Schneidauftrag vorhanden ist;

f) Optimiertes Anordnen zumindest eines Teils der zu produzierenden Nutzteile des aktuellen Schneidauftrags auf dem Bearbeitungsteil, so dass der Bearbeitungsteil zweigeteilt ist in einen zusammenhängenden Bereich mit Nutzteilen und einen zusammenhängenden Restteil ohne Nutzteile;
g) Erzeugen eines Materialfluss-Steuerbefehls für den Restteil, wobei der Materialfluss-Steuerbefehl mindestens zwei Zustände zum Steuern eines Materialflusses einnehmen kann, nämlich ein Zustand, der ein einlagern signalisiert und ein Zustand der ein rezyklieren signalisiert,
h) wobei für einen definierten Zul<unftszeitraum (TZ) ab Zeitpunkt des aktuellen Schneidauftrags (T0) folgende Schritte durchgeführt werden:

i. Berechnen einer Wiederverwendungs-Prognose per Ende des Zul<unftszeitraums für der Restteil unter Verwendung der Daten aus der Auftragsdatenbanl<;
ii. Vergleichen der Wiederverwendungs-Prognose mit einer Untergrenze;
iii. Erzeugen des Zustands einlagern, wenn die Wiederverwendungs-Prognose mindestens so gross wie die Untergrenze ist oder Erzeugen des Zustands rezyklieren, wenn die Wiederverwendungs-Prognose unter der Untergrenze ist;
iv. Aktualisieren der Materiallagerdatenbanl<, sofern für den Restteil der Materialfluss-Steuerbefehl den Zustand einlagern hat;
v. Einfügen des aktuellen Schneidauftrags in die Auftragsdatenbanl<;

wonach in der Anlage der gemäss Schritt e) vom Rechner ausgewählte Bearbeitungsteil aus dem Materiallager zur Schneidmaschine gebracht wird, die Schneidmaschine die Nutzteile aus dem Bearbeitungsteil schneidet und den Restteil gemäss dem Materialfluss-Steuerbefehl entweder in das Materiallager eingelagert wird oder recycliert wird.

8. Verfahren

geeignet, um eine Vielzahl von unterschiedlichen und zu unregelmässigen Zeitpunkten auftretenden Schneidaufträgen im Wesentlichen sequentiell abzuarbeiten,

zum Betreiben einer Anlage mit folgenden I<omponenten:

      a) eine Schneidmaschine zum Schneiden von Nutzteilen aus einem Standardmaterialteil oder einem wiederverwendbaren Restteil;
      b) ein Materiallager mit Standardmaterialteilen und wiederverwendbaren Restteilen;
      c) einen Rechner;
      d) Datenbanken, nämlich

            i. eine Auftragsdatenbanl< mit Daten von in der Vergangenheit ausgeführten Schneidaufträgen,
            ii. eine Materiallagerdatenbanl< mit Daten von Standardteilen und Restteilen,
            iii. eine Auftragsklassendatenbank mit Daten zu Klassen von Schneidaufträgen,
            iv. eine Restteilklassendatenbank mit Daten zu Klassen von Restteilen,

wobei durch einen Rechner, insbesondere zum Verbessern der Materialausnutzung, für einen aktuellen Schneidauftrag,
der zumindest ein zu produzierendes Nutzteil mit geometrischer Form, Materialeigenschaften und Anzahl Nutzteile als technische Nutzteildaten beinhaltet,
zumindest folgende Schritte durchgeführt werden:

      e) Auswählen eines Bearbeitungsteils aus der Materiallagerdatenbanl<, indem

            i. entweder ein wiederverwendbares Restteil als Bearbeitungsteil ausgewählt wird, so dass aus dem Restteil zumindest ein Nutzteil des aktuellen Schneidauftrags produziert werden kann;
            ii. oder ein Standardteil als Bearbeitungsteil ausgewählt wird, sofern kein wiederverwendbares Restteil für den aktuellen Schneidauftrag vorhanden ist;

      f) Optimiertes Anordnen zumindest eines Teils der zu produzierenden Nutzteile des aktuellen Schneidauftrags auf dem Bearbeitungsteil, so dass der Bearbeitungsteil geometrisch zweigeteilt ist in einen zusammenhängenden Bereich mit Nutzteilen und einen zusammenhängenden Restteil ohne Nutzteile;
      g) Erzeugen eines Materialfluss-Steuerbefehls für den Restteil, wobei der Materialfluss-Steuerbefehl mindestens zwei Zustände zum Steuern eines Materialflusses hat, nämlich einlagern und rezyklieren, wobei für einen definierten Zul<unftszeitraum (TZ) ab Zeitpunkt des aktuellen Schneidauftrags (T0) folgende Schritte durchgeführt werden:

            i. Einordnen der in der Vergangenheit ausgeführten Schneidaufträge in vorgegebene Auftragsklassen der Auftragsklassen-Datenbank;
            ii. Einordnen der Restteile in der Materiallagerdatenbanl< in vorgegebene Restteilklassen der Restteilklassen-Datenbank;
            iii. Berechnen einer Wiederverwendungs-Prognose per Ende des Zul<unftszeitraums für der Restteil unter Verwendung der Daten aus der Auftragsdatenbanl< und der Auftragsklassen-Datenbank sowie der Daten aus der Materiallager-Datenbank und der Restklassen-Datenbank;
            iv. Vergleichen der Wiederverwendungs-Prognose mit einer Untergrenze;
            v. Erzeugen des Zustands einlagern, wenn die Wiederverwendungs-Prognose mindestens so gross wie die Untergrenze ist oder Erzeugen des Zustands rezyklieren, wenn die Wiederverwendungs-Prognose unter der Untergrenze ist;
            vi. Aktualisieren der Materiallagerdatenbanl<, sofern für den Restteil der Materialfluss-Steuerbefehl den Zustand einlagern hat;
            vii. Einfügen des aktuellen Schneidauftrags in die Auftragsdatenbanl<;

9. Verfahren nach Anspruch 8, **dadurch gekennzeichnet, dass** weiter in der Anlage der vom Rechner ausgewählte Bearbeitungsteil aus dem Materiallager zur Schneidmaschine gebracht wird, die Schneidmaschine die Nutzteile aus dem Bearbeitungsteil schneidet und den Restteil gemäss dem Materialfluss-Steuerbefehl entweder in das Materiallager eingelagert wird oder recycliert wird.

10. Computerprogrammprodukt, umfassend Befehle, die bei der Ausführung des Programms durch einen Computer diesen veranlassen, die Schritte gemäss Anspruch 8 auszuführen:

**Fig. 1**

**Fig. 2**

6 → 20 → Step A

3

7 → 21 → Step B

Step B → 22 → Step C

Step C → 23 → Step D

Step D → 24 → 11

**Fig. 3**

23

25   26   22

Fig. 4

Fig. 5

Fig. 6

Fig. 7

Fig. 8

```
                                          ┌──────┐
                                         / 23  /
                                        └──────┘
                                           │
                                           ▼
    ┌────────┐      ┌──────┐      ┌─────────────┐
    │   18   │ ───▶ / RKi / ───▶ │  Step D-A   │
    └────────┘      └──────┘      └─────────────┘
                                           │
                                           ▼
                                      ◇ Step D-B ◇ ──────────────┐
                                           │                     │
                                           ▼                     │
    ┌────────┐      ┌──────┐      ┌─────────────┐                │
    │   17   │ ───▶ / AKj / ───▶ │  Step D-C   │                │
    └────────┘      └──────┘      └─────────────┘                │
                                           │                     │
                                           ▼                     │
                                      ◇ Step D-D ◇ ──────────────┤
                                           │                     │
                                           ▼                     ▼
    ┌────────┐      ┌──────┐      ┌──────────┐   ○   ┌──────────┐
    │   18   │ ◀─── / RKi / ◀─── │ status=1 │ ▶ ○ ◀ │ status=0 │
    └────────┘      └──────┘      └──────────┘       └──────────┘
                                                │
                                                ▼
                                            ┌──────┐
                                           / 24  /
                                           └──────┘
```

## Fig. 9

```
                                      ◇ Step D-D ◇ ──────────────┐
                                           │                     │
                                           ▼                     │
                                    ┌─────────────┐              │
                                    │  Step D-E   │              │
                                    └─────────────┘              │
                                           │                     │
                                           ▼                     │
                                    ┌─────────────┐              │
                                    │  Step D-F   │              │
                                    └─────────────┘              │
                                           │                     │
                                           ▼                     │
                                      ◇ Step D-G ◇ ──────────────┤
                                           │                     │
                                           ▼                     ▼
                                    ┌──────────┐         ┌──────────┐
                                    │ status=1 │         │ status=0 │
                                    └──────────┘         └──────────┘
                                           │
                                           ▼
                                       ┌──────┐
                                      / 24  /
                                      └──────┘
```

## Fig. 10

Europäisches
Patentamt

European
Patent Office

Office européen
des brevets

**EUROPÄISCHER RECHERCHENBERICHT**

Nummer der Anmeldung

EP 24 15 1467

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 699 119 A1 (MACOTEC S R L [IT]) 26. August 2020 (2020-08-26) * Absätze [0023], [0024], [0056] - Absatz [0058]; Abbildungen 1-9 * ----- | 1-10 | INV. G06Q10/04 G06Q10/087 G06Q10/30 G06Q50/04 |
| A,D | US 4 534 002 A (URBAN ROBERT G [US]) 6. August 1985 (1985-08-06) * Anspruch 1 * ----- | 1-10 | |
| A,D | BE 1 027 915 A1 (LUCKX NV [BE]) 16. Juli 2021 (2021-07-16) * Ansprüche 1-5 * ----- | 1-10 | |

RECHERCHIERTE
SACHGEBIETE (IPC)

G06Q
B65G

Der vorliegende Recherchenbericht wurde für alle Patentansprüche erstellt

| Recherchenort | Abschlußdatum der Recherche | Prüfer |
|---|---|---|
| München | 26. Juni 2024 | Liendl, Martin |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**    EP 24 15 1467

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2024

| Im Recherchenbericht angeführtes Patentdokument | Datum der Veröffentlichung | Mitglied(er) der Patentfamilie | Datum der Veröffentlichung |
|---|---|---|---|
| EP 3699119 A1 | 26-08-2020 | EP 3699119 A1 | 26-08-2020 |
| | | ES 2898440 T3 | 07-03-2022 |
| US 4534002 A | 06-08-1985 | KEINE | |
| BE 1027915 A1 | 16-07-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4534002 A
- BE 1027915 A1